# EUROPEAN PATENT APPLICATION

(11) **EP 2 962 902 A1**
(43) Date of publication of application: **06.01.2016**
(21) Application number: 14756833.1
(22) Date of filing: 14.02.2014
(51) Int. Cl.: B60R 16/027, B60R 16/02, G06F 3/0354

(54) **VEHICULAR OPERATING DEVICE**

(30) Priority: 28.02.2013 JP 2013038793
(71) Applicant: Nippon Seiki Co., Ltd., Nagaoka-shi, Niigata 940-8580 (JP)
(72) Inventor: IMAI,Yuji, Niigata (JP)
(74) Representative: Jackson, Richard Eric
(86) International application number: PCT/JP2014/053493
(87) International publication number: WO 2014/132818

(57) **Abstract**

Provided is a vehicular operating device that can improve input precision even during operation by the thumbs while the steering wheel is grasped. The vehicular operating device (100) is installed in a steering device (10) of a means of transport and receives an input operation, wherein the vehicular operating device (100) is provided with an operation surface with which a detection object that performs the input operation comes in contact, and a sensor unit for detecting the position where the detection object comes in contact with the operation surface, the operation surface being provided with a design that indicates a rotation gesture area, and the sensor unit being such that a portion for determining a rotation gesture is made into an annular area accounting for the moveable range of the thumb used by the user to grasp the steering device (10) .

## Description

### Technical Field

The present invention relates to a vehicular operating device, particularly, to a vehicular operating device mounted in a steering device.

### Background Art

A vehicular operating device in the related art is configured to receive an input operation in which a user traces a predetermined trajectory on an operation surface, and an uplifted portion is formed on the operation surface such that the uplifted portion works as the reference for the input operation. This vehicular operating device is mounted in the steering device of a transport (refer to PTL 1).

### Citation List

### Patent Literature

PTL 1: JP-A-2012-53592

### Summary of Invention

### Technical Problem

However, in the vehicular operating device in the related art, when a user makes a rotation gesture to describe a circle while grasping a steering wheel, due to the grasping of the steering wheel, the movable range of the thumb is restricted, it is difficult to input a rotation operation for precisely describing a circle, and this rotation operation is unlikely to be recognized as a rotation operation for describing a circle, which is a problem.

The present invention is made to solve the aforementioned problem, and an object of the present invention is to provide a vehicular operating device that can improve the input precision even if a user operates the vehicular operating device with the thumb while grasping a steering device. Solution to Problem

In order to achieve the above described object, according to an aspect of the present invention, there is provided a vehicular operating device that is mounted in a steering device of a transport, and receives an input operation, the device including: an operation surface with which a detection object performing the input operation comes into contact; and a sensor unit configured to detect the position of the detection object in contact with the operation surface, in which the operation surface includes a design indicative of a rotation gesture area, and an area on the sensor unit for determining a rotation gesture is an annular area which is defined in a state where the movable range of a user' s thumb is taken into consideration when a user grasps the steering device.

### Advantageous Effects of Invention

In a vehicular operating device of the present invention, it is possible to improve the input precision even if a user operates the vehicular operating device with the thumb while grasping a steering device.

### Brief Description of Drawings

[Fig. 1] This is a diagram illustrating the configuration of a system including a vehicular operating device according to a first embodiment of the present invention.
[Fig. 2] This is a schematic view illustrating the vicinity of a driver's seat in a vehicle in which the vehicular operating device is mounted.
[Fig. 3] (a) is an exploded perspective view illustrating the configuration of the vehicular operating device, and (b) is a perspective view when parts illustrated in (a) are assembled together.
[Fig. 4] (a) is a plan view of a contact sensor, and (b) is a sectional view of a front surface cover, a sensor sheet, and a spacer of the contact sensor illustrated in (a), which is taken along line A-A.
[Fig. 5] This is a view illustrating a first sensor array and a second sensor array of the sensor sheet.
[Fig. 6] This is a flowchart illustrating a vehicle-mounted electronic equipment control process executed by a control apparatus according to the first embodiment.
[Fig. 7] (a) and (b) are graphs illustrating an example of the amount of gesturing featured.
[Fig. 8] This is a view illustrating an example of the amount of gesturing featured which is associated with a gesture operation.
[Fig. 9] This is a view illustrating an example of a gesture operation and an operation performed by vehicle-mounted electronic equipment in correspondence with the gesture operation.
[Fig. 10] This is a front view of a portion of the vehicular operating device, which determines a rotation gesture.
[Fig. 11] This is a front view of a portion of the vehicular operating device, which determines a rotation gesture, according to a second embodiment of the present invention.
[Fig. 12] This is a front view of a portion of the vehicular operating device, which determines a rotation gesture, according to a third embodiment of the present invention.
[Fig. 13] This is a front view of a portion of the vehicular operating device, which determines a rotation gesture, according to a fourth embodiment of the present invention.
[Fig. 14] This is a front view of a portion of the vehicular operating device, which determines a rotation gesture, according to a fifth embodiment of the present invention.

### Description of Embodiments

A vehicular operating device according to an embodiment of the present invention will be described with reference to the accompanying drawings.

### 1. First Embodiment

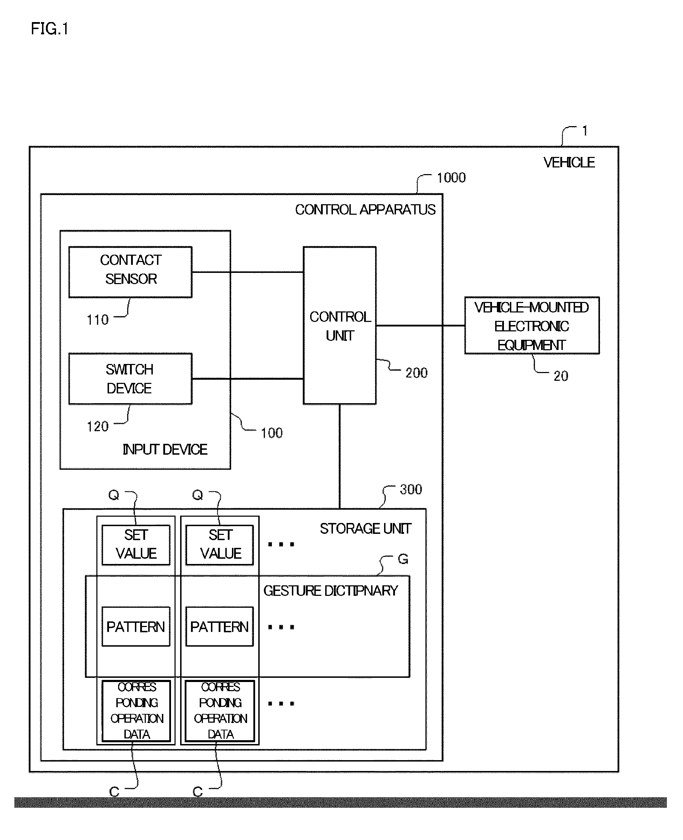

A vehicular operating device according to a first embodiment is a vehicular operating device 100 that is mounted in a vehicle 1, as illustrated in Fig. 1. When a user (typically, a driver) of the vehicle 1 operates the vehicular operating device 100, a control apparatus 1000 controls vehicle-mounted electronic equipment 20 such that the vehicle-mounted electronic equipment 20 performs various operations in correspondence with the user's operation.

### (Configuration of Vehicle 1)

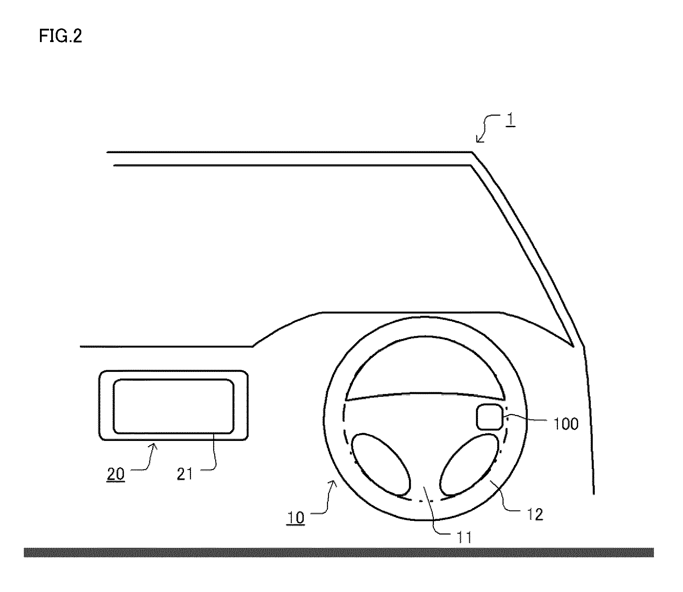

As illustrated in Fig. 2, the vehicle 1 includes a steering device 10, and the vehicle-mounted electronic equipment 20.

The steering device 10 is a portion of the steering apparatus of the vehicle 1, and includes a main body 11 and a steering wheel 12.

The main body 11 is a spoke portion connected to the steering shaft (not illustrated) of the vehicle 1, and includes the vehicular operating device 100 on the right side thereof. An attachment hole (not illustrated) adapted for the shape of the vehicular operating device 100 is formed in the main body 11. When the vehicular operating device 100 is attached into the attachment hole, only an operation surface (to be described later) of the vehicular operating device 100 is exposed to the outside.

The steering wheel 12 is a ring-shaped member which is attached to the main body 11, and which the user grasps for the steering of the vehicle 1.

The vehicle-mounted electronic equipment 20 is an audio device, a car navigation device, or the like, is electrically connected to a control unit 200 (to be described later), and operates in correspondence with a control signal from the control unit 200. The vehicle-mounted electronic equipment 20 displays an image on a display unit 21 of the vehicle-mounted electronic equipment 20 in correspondence with the operation.

### (Configuration of Control Apparatus 1000)

The control apparatus 1000 includes the vehicular operating device 100, the control unit 200, and a storage unit 300.

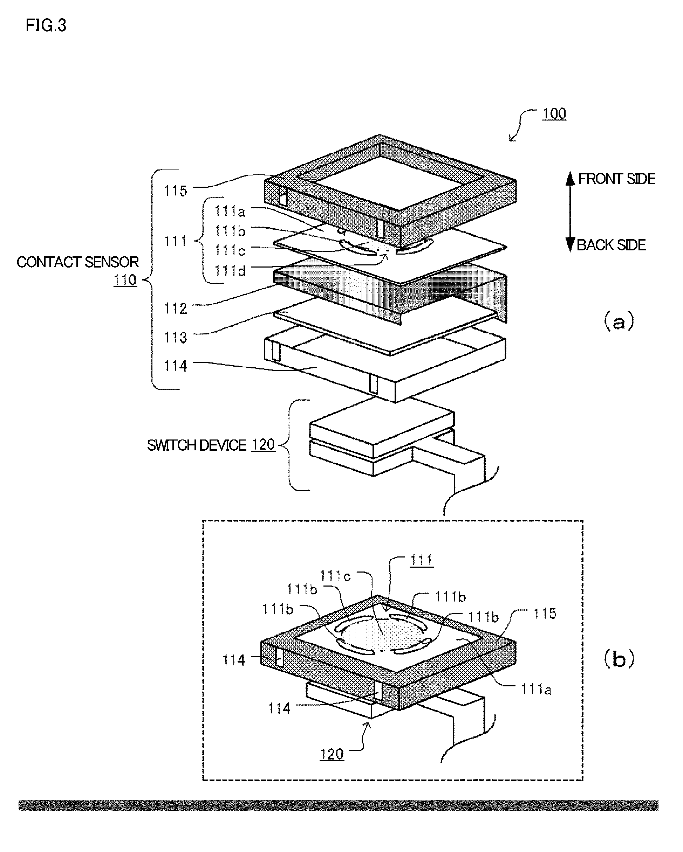

As illustrated in (a) and (b) of Fig. 3, the vehicular operating device 100 includes a contact sensor 110 and a switch device 120.

The contact sensor 110 is a touchpad device that detects a target for control performed by the control unit 200 (to be described later), that is, the position of the thumb or the like in contact with the operation surface when the user performs an operation (hereinafter, referred to as a gesture operation) for tracing a predetermined trajectory on the operation surface with the thumb or the like. The contact sensor 110 includes a front surface cover 111; a sensor sheet 112; a spacer 113; a lower case 114; and an upper case 115.

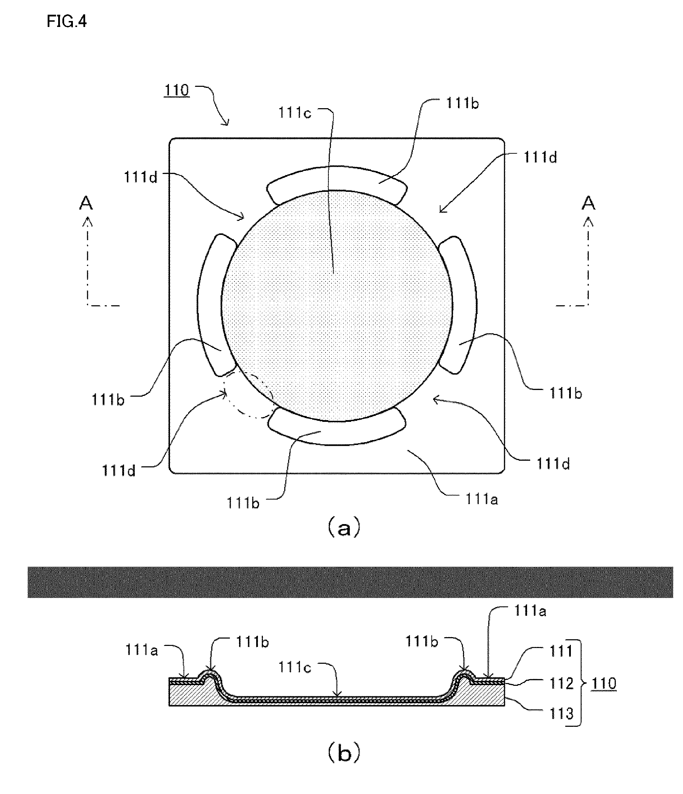

The front surface cover 111 is formed in the shape of a sheet made of an insulating material such as acrylic resin or the like, and has the operation surface with which the user' s finger or the like comes into contact when the gesture operation is performed. As illustrated in (b) of Fig. 4, the operation surface of the front surface cover 111 has concavity and convexity, and the operation surface is formed in a stepped manner due to the concavity and convexity. The operation surface includes a flat surface portion 111a; an uplifted portion 111b; a recessed portion 111c; and a gap portion 111d.

The flat surface portion 111a is a flat surface-like portion of the front surface cover 111.

As illustrated in (b) of Fig. 4, the uplifted portion 111b is a portion which is uplifted to bulge from the flat surface portion 111a toward a front side. As illustrated in (a) of Fig. 4, when the operation surface is seen from the front side, a plurality of the uplifted portions 111b in the shape of an arc are disposed with a predetermined gap therebetween such that the uplifted portions 111b substantially surround a circle. As illustrated by arrows at both ends in (a) of Fig. 3, the "front side" refers to a side of the vehicular operating device 100 which faces the user, and a "back side' refers to the opposite side thereto.

As illustrated in (b) of Fig. 4, the recessed portion 111c is positioned substantially at the center of the operation surface, and is a portion which is recessed to sink from the flat surface portion 111a toward the back side. As illustrated in (a) of Fig. 4, the recessed portion 111c is formed inside of the uplifted portions 111b which are disposed in the shape of a circle. The design of a rotation gesture area is made by the uplifted portions 111b and the recessed portion 111c.

As illustrated in (a) of Fig. 4 (one of four gap portions 111d is illustrated by the alternating long and two short dashes line), the gap portion 111d is a portion between the arc-shaped uplifted portions 111b. The gap portion 111d is a portion of the flat surface portion 111a.

The sectional shape of each of the flat surface portion 111a, the uplifted portion 111b, and the recessed portion 111c is formed such that the flat surface portion 111a, the uplifted portion 111b, and the recessed portion 111c are smoothly connected to each other so as not to interfere with the user's gesture operation as illustrated in (b) of Fig. 4.

The sensor sheet 112 is a projected capacitive sensor sheet that has multiple sensors (detection electrodes) 1120 for detecting the position of a detection object such as a finger, and the sensor sheet 112 is positioned below the back surface of the front surface cover 111.

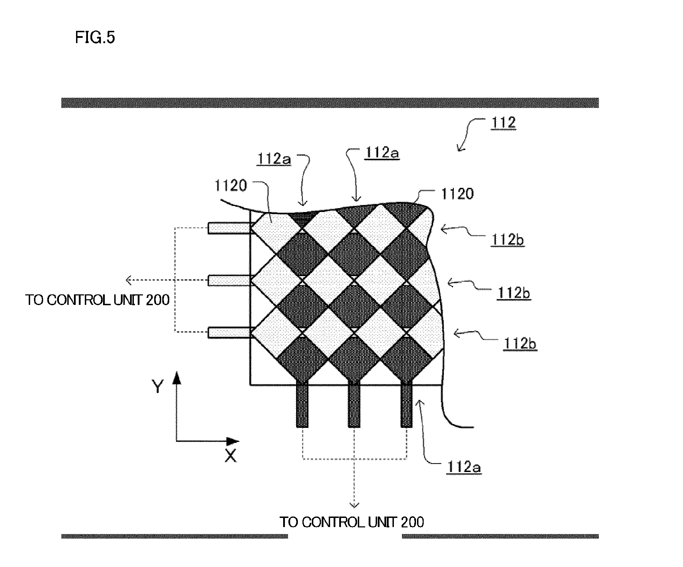

As illustrated in Fig. 5, the sensor sheet 112 is schematically configured by overlapping two layers on top of each other: one layer has a first sensor array 112a for detecting the position of the detection object in an X direction, and the other layer has a second sensor array 112b for detecting the position of the detection object in a Y direction. The first sensor array 112a and the second sensor array 112b are combined together, and thus the sensors 1120 are disposed in a matrix pattern in the sensor sheet 112. The first sensor array 112a and the second sensor array 112b are electrically connected to the control unit 200 (to be described later).

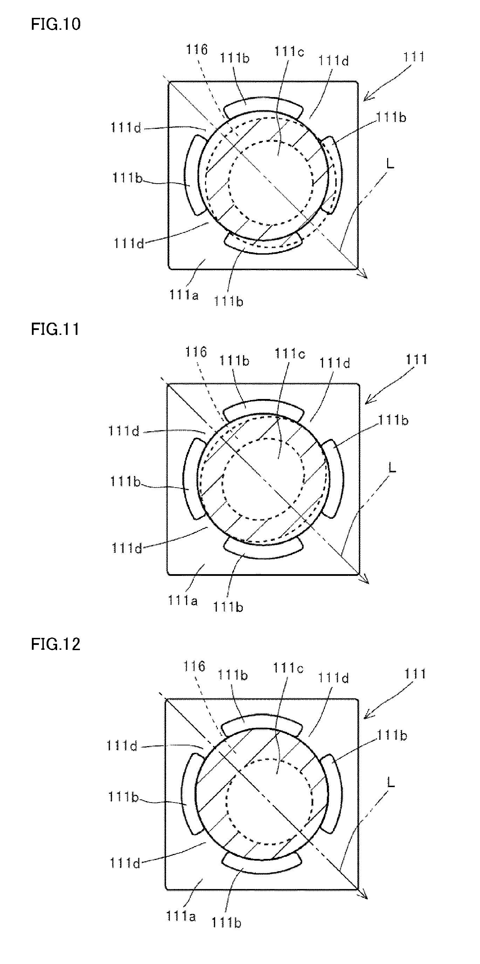

When the detection object such as a finger comes into contact with the front surface cover 111, an electrostatic capacity between the detection object and the sensors 1120 changes, with the sensors 1120 being positioned below the back surface of the front surface cover 111. Since the control unit 200 is electrically connected to each of the sensors 1120, the control unit 200 can detect a change in the electrostatic capacity of each of the sensors. The control unit 200 calculates an input coordinate value (X, Y) indicative of the contact position of the detection object based on a change in electrostatic capacity. The input coordinate value is a coordinate value for each of the sensors 1120 in an X-Y coordinate system, and is pre-set on the operation surface. The input coordinate value is expressed as an X coordinate and a Y coordinate, and here, the X coordinate is assigned to a median position (for example, the position of a sensor 1120 in which the electrostatic capacity of the sensor 1120 is greater than a predetermined threshold value, and is the greatest value) in the distribution of a change in the electrostatic capacity in the X direction, and the Y coordinate is assigned to a median position (for example, the position of a sensor 1120 in which the electrostatic capacity of the sensor 1120 is greater than a predetermined threshold value, and is the greatest value) in the distribution of a change in the electrostatic capacity in the Y direction. The control unit 200 calculates the input coordinate value (X, Y) by calculating the X coordinate and the Y coordinate. As illustrated in Fig. 10, an area 116 for determining a rotation gesture on the sensors 1120 is an annular area which is defined in a state where the movable range of the user' s thumb is taken into consideration when the user grasps the steering device 10, and in the embodiment, an area for determining a rotation gesture is an annular area that moves in a direction (in the direction of arrow L in Fig. 10) toward the base of the user's thumb relative to the design when the user is assumed to grasp the steering device 10.

Returning to Fig. 4, since the sensor sheet 112 is formed integrally with the front surface cover 111 using drawing, the sensor sheet 112 is processed in the same shape as that of the front surface cover 111 (refer to (b) of Fig. 4). Since the sensor sheet 112 and the front surface cover 111 are integrally formed in this way, the sensor sheet 112 and the front surface cover 111 work as a piece of sheet material, and the step-like portions of the operation surface such as the uplifted portions 111b and the recessed portion 111c are configured as the curved portions of the piece of sheet material. Since the sensor sheet 112 and the front surface cover 111 are integrally formed in this way, the back surface of the front surface cover 111 is in contact with the front surface of the sensor sheet 112. Accordingly, the sensors 1120 are disposed in correspondence with the stepped shape of the front surface cover 111. Since the sensors 1120 are disposed in this way, even if a gesture operation is performed on the operation surface with the step-like portions such as the uplifted portions 111b, the control unit 200 can detect a change in the electrostatic capacity of each of the sensors.

As illustrated in (b) of Fig. 4, the spacer 113 is a member that is positioned below the back surface of the sensor sheet 112, is formed to be adapted for the shape of the front surface cover 111 and the sensor sheet 112 which are integrally formed, and holds the shape of the front surface cover 111 and the sensor sheet 112 when the user presses the front surface cover 111 from the front side.

Returning to Fig. 3, the lower case 114 is a box-like member made of synthetic resin or the like, and accommodates the aforementioned portions 111 to 113 on the front side of the lower case 114.

The upper case 115 is a cover member that covers the front side of the lower case 114 that accommodates the aforementioned portions 111 to 113, has an opening through which the operation surface of the front surface cover 111 is exposed, and is made of synthetic resin or the like.

The switch device 120 is positioned below the back surface of the contact sensor 110, and is electrically connected to the control unit 200. When the user performs an operation (hereinafter, referred to as an input confirmation operation) for pressing the operation surface of the vehicular operating device 100 downward, the switch device 120 is pressed, and transmits a predetermined input signal to the control unit 200. The input confirmation operation is accomplished by confirming a command selected by a predetermined gesture operation, which will be described later.

Here, the upper case 115 of the contact sensor 110 is welded to the main body 11 using soft resin such that the vehicular operating device 100 is attached to the main body 11 of the steering device 10. Since the vehicular operating device 100 is attached to the main body 11 in this way, the vehicular operating device 100 is structured in such a way that the contact sensor 110 sinks, and the switch device 120 is pressed when the user presses the operation surface downward.

The vehicular operating device 100 is configured to include the aforementioned portions. (b) of Fig. 3 is a schematic view of the assembled vehicular operating device 100.

Returning to Fig. 1, the control unit 200 is configured to include a central processing unit (CPU) and the like, and performs various processes or control by executing operation programs stored in the storage unit 300. At least portions of the control unit 200 may be configured as various dedicated circuits such as an application specific integrated circuit (ASIC).

The storage unit 300 is configured to include a read only memory (ROM), a random access memory (RAM), a flash memory, and the like, and works as a work area for the CPU of the control unit 200, a program area in which the operation programs executed by the CPU are stored, a data area, and the like.

The program area stores the operation programs such as i) a program for executing a vehicle-mounted electronic equipment control process (to be described later), and ii) a program for transmitting a predetermined control signal to the vehicle-mounted electronic equipment 20 in correspondence with the input confirmation operation received by the switch device 120.

As illustrated, the data area includes a pre-stored gesture dictionary G; corresponding operation data C; a set value Q which is a predetermined value for the amount of gesturing featured (to be described later); and the like.

The gesture dictionary G is data required to recognize a gesture operation being performed, and includes multiple patterns indicative of the features of a trajectory described by the gesture operation. A pattern indicative of the features of a gesture operation is configured as a combination of the components of the amount of gesturing featured (to be described later). In the embodiment, this pattern is a pattern indicative of the features of "a gesture operation performed relative to the uplifted portions" which will be described later.

The corresponding operation data C is control signal data that causes the vehicle-mounted electronic equipment 20 to perform a predetermined operation. The corresponding operation data C is multiple pieces of data, and the multiple pieces of data correlate to the multiple patterns included in the gesture dictionary G. For example, a piece of command data for transmitting a volume control signal, which causes the vehicle-mounted electronic equipment 20 to change audio volume, is pre-stored as the corresponding operation data C in the data area while correlating to a pattern indicative of the features of a gesture operation which is performed in the shape of an arc along the uplifted portions 111b.

The set value Q is data for a predetermined value for the amount of gesturing featured, and is data for triggering to transmit a control signal to the vehicle-mounted electronic equipment 20. The set value Q correlates to each of the multiple patterns included in the gesture dictionary G. That is, there are a plurality of the set values Q. For example, the amount of gesturing featured, which is selected as a target for comparison with the set value Q, is a length S of a trajectory which is obtained by connecting multiple input coordinate values to each other straightly in time series.

The operation of the control apparatus 1000 will be described in detail later, and hereinafter, the role of each of the gesture dictionary G, the corresponding operation data C, and the set value Q is briefly described. i) The gesture dictionary G is used to recognize a correlation between a gesture operation being performed and one of the predetermined patterns (that is, the type of gesture operation being performed). ii) The corresponding operation data C is used to determine which control signal is to be transmitted to the vehicle-mounted electronic equipment 20 in correspondence with the gesture operation recognized based on the gesture dictionary G. iii) The set value Q is used to determine a value that the amount of gesturing featured, which is associated with the recognized gesture operation, has to reach so as to transmit a control signal in correspondence with the corresponding operation data C.

Each piece of data stored in the storage unit 300 is appropriately stored as a default value or by a user' s operation using known data registration.

### (Operation)

The control apparatus 1000 with the aforementioned configuration controls various operations of the vehicle-mounted electronic equipment 20 in correspondence with a unique "gesture operation performed relative to the uplifted portions" in the embodiment which is performed on the operation surface of the contact sensor 110. The vehicle-mounted electronic equipment control process for performing this control will be described.

### [Vehicle-mounted Electronic Equipment Control Process]

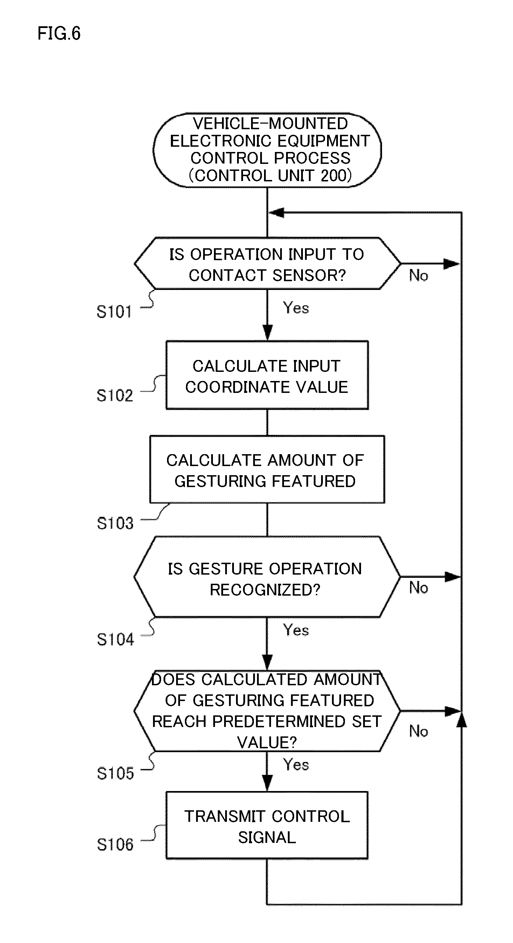

The process according to the flowchart illustrated in Fig. 6 is executed by the control unit 200. For example, this process starts based on the condition that the vehicle-mounted electronic equipment 20 has started up.

Upon the start-up of the process, the control unit 200 determines whether an operation is being input to the contact sensor 110 (step S101). The control unit 200 determines whether an operation is being input based on whether some of the sensors 1120 arrayed in the X direction and the Y direction have electrostatic capacities greater than the predetermined threshold value. When some of the sensors 1120 with electrostatic capacities greater than the predetermined threshold value are present in the X direction and the Y direction, there is a high possibility that the detection object is in contact with the operation surface, and thus there is a high possibility that the operation is being input. For this reason, in this case, the control unit 200 determines that the contact sensor 110 has received the input operation (Yes: step S101), and executes step S102. In other cases, the control unit 200 determines that the contact sensor 110 has not received the input operation (No: step S101), and executes step S101. In this way, the control unit 200 waits until an operation is input. A timer or the like (not illustrated) tracks time, and the control unit 200 ends time tracking when the time tracking is already being performed, and the result in step S101 is determined as No. In a case where the result in step S101 is determined as Yes, when time tracking is already being performed, the control unit 200 continuously tracks time, and when time tracking is not performed, the control unit 200 starts time tracking. In this way, the control unit 200 continuously tracks time from when the detection object initially comes into contact with the contact sensor 110 until the contact therebetween is released.

In step S102, the control unit 200 calculates input coordinate values (X, Y) (refer to the description given above), and the process proceeds to step S103. The control unit 200 stores the calculated input coordinate values in the storage unit 300 in time series. The input coordinate values are stored in time series until the tracking of an elapse of time is completed, or from the start of storing the input coordinate values until a predetermined period of time has elapsed. As a result, multiple input coordinate values, which are calculated between a current time and a previous time, that is, when a predetermined amount of time has returned from the current time to the previous time, are stored.

In step S103, the control unit 200 calculates various kinds of the amount of gesturing featured, and the process proceeds to step S104.

Here, the amount of gesturing featured is an amount indicative of the features of a trajectory which is described by a gesture operation currently being performed. The amount of gesturing featured is an amount which is calculated based on a period of time tracking, an input coordinate value (X0, Y0) which is calculated initially after the start of time tracking, and a currently calculated input coordinate value (X, Y). The input coordinate value (X0, Y0), which is calculated initially after the start of time tracking represents an initial position when the input of an operation starts.

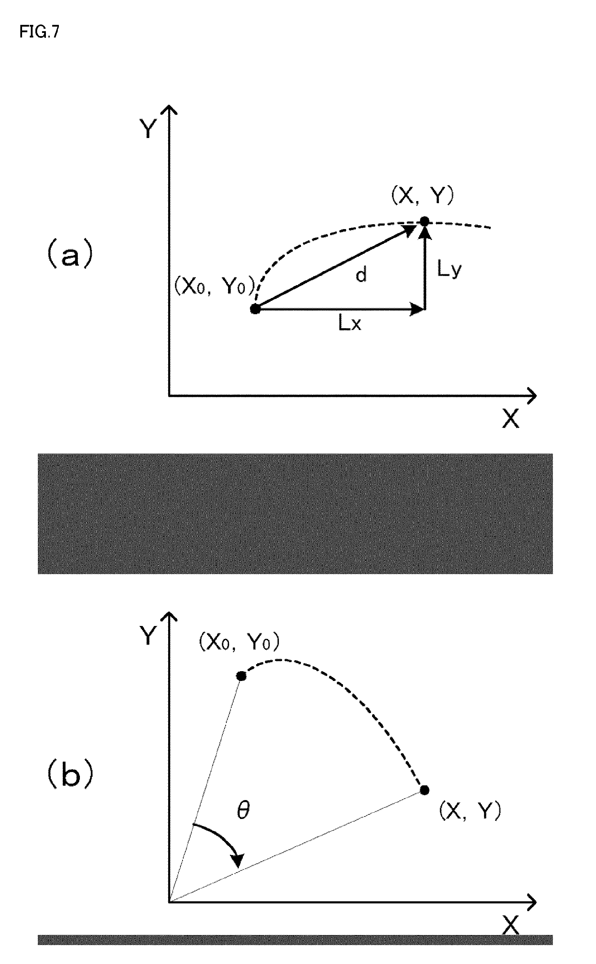

The amount of gesturing featured includes the currently calculated input coordinate value (X, Y), and a coordinate-to-coordinate distance (Lx) in the X direction, a coordinate-to-coordinate distance (Ly) in the Y direction, a direction (d), and a movement time (t) between the input coordinate value (X0, Y0) and the input coordinate value (X, Y) (refer to (a) of Fig. 7). Lx is X - X0, Ly is Y - Y0, d is an amount which is calculated based on Lx and Ly, and t is a time interval measured from the start of time tracking. By virtue of a combination of the components of the amount of gesturing featured, the control unit 200 can acquire information indicative of a trajectory which is traced on the operation surface of the vehicular operating device by the user.

Insofar as the amount of gesturing featured is an amount of extracted features of a trajectory described by a gesture operation, the amount of gesturing featured is not limited to the aforementioned pattern. The selection of components of the amount of gesturing featured, and the way the selected components are combined together are appropriately determined while the nature of a gesture operation desired to be recognized is taken into consideration. When a rotation gesture operation is desired to be recognized, as the amount of gesturing featured, a rotation direction (θ) may be calculated (refer to (b) of Fig. 7), or a coordinate-to-coordinate distance (L = {(Lx)2 + (Ly)2}1/2), and a speed (V = L/t) may be calculated.

In step S102, when two input coordinate values are not stored, the amount of gesturing featured cannot be calculated, and thus the process returns to step S101, which is not illustrated. The amount of gesturing featured, calculated in step S103, is stored until time tracking ends.

In step S104, the control unit 200 performs a procedure for recognizing correlation between a gesture operation being performed and one of the multiple patterns of gesture operation (included in the gesture dictionary G) using a predetermined verification method, based on the amount of gesturing featured calculated and stored in step S103. The predetermined verification is performed by comparing a combination of the components of the amount of gesturing featured with the patterns of gesture operation included in the gesture dictionary G, using a nearest neighboring algorithm (NN) method, a k-nearest neighboring algorithm (k-NN) method, or the like. That is, in step S104, the control unit 200 performs a procedure for determining the type of the gesture operation being performed.

When the gesture operation being performed is recognized (Yes: step S104), the process proceeds to step S105. In contrast, when the gesture operation being performed is not recognized (No: step S104), the process returns to step S101.

In step S105, the control unit 200 determines whether the calculated amount of gesturing featured reaches the set value Q which correlates to the pattern associated with the gesture operation recognized in step S104. Here, the amount of gesturing featured, which is being compared with the set value Q, is appropriately determined for each of the multiple patterns included in the gesture dictionary G in correspondence with the features of a gesture operation desired to be recognized. For example, when the recognized gesture operation is an operation for tracing an arc on the operation surface along the uplifted portions 111b, the amount of gesturing featured, which is compared with the set value Q correlating to the pattern of the gesture operation, is the length S of a trajectory which is obtained by connecting multiple input coordinate values to each other straightly in time series. When the amount of gesturing featured reaches a predetermined set value (Yes: step S105), the process proceeds to step S106. In contrast, when the amount of gesturing featured does not reach the predetermined set value Q (No: step S105), the process returns to step S101.

In step S106, the control unit 200 reads the corresponding operation data C from the storage unit 300, and transmits a control signal to the vehicle-mounted electronic equipment 20 in correspondence with the recognized gesture operation, and the process returns to step S101.

In a brief description of the flow of steps S104 to S106, i) the control unit 200 determines correlation between a gesture operation being performed and one of the multiple patterns included in the gesture dictionary G (that is, recognizes which type of gesture operation is performed). ii) The control unit 200 determines whether the calculated amount of gesturing featured reaches the set value Q which correlates to the pattern associated with the recognized gesture operation. iii) When the amount of gesturing featured reaches the set value Q, the control unit 200 transmits a control signal which correlates to the pattern associated with the recognized gesture operation.

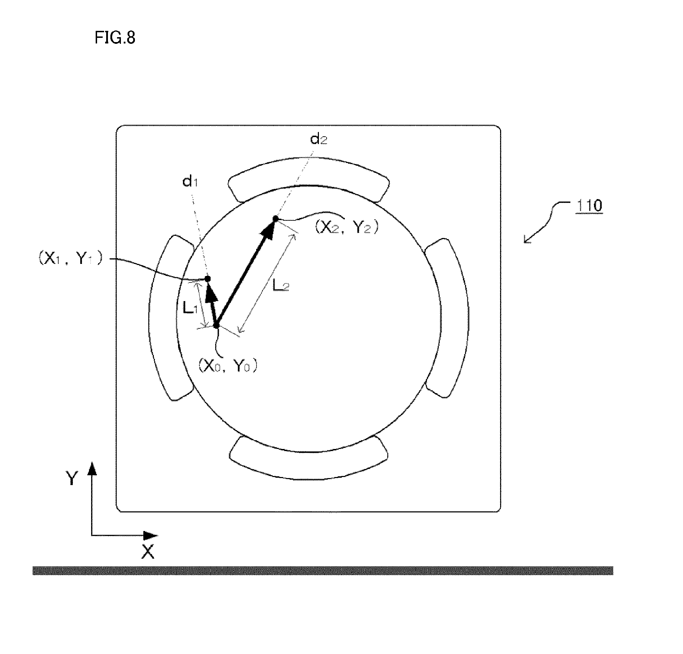

The sequence of the vehicle-mounted electronic equipment control process has been described above. Hereinafter, an example of how an actual gesture operation is recognized in this process will be briefly described based on the assumption that the gesture operation is performed along the uplifted portions 111b. The following signs are based on those illustrated in (a) of Fig. 8.

The control unit 200 calculates a first amount of gesturing featured (a coordinate-to-coordinate distance L1, a direction d1, and the like) based on the input coordinate value (X0, Y0) which is calculated initially after the start of time tracking, and a first input coordinate value (X1, Y1) which is calculated thereafter (step S103).

For example, when a gesture operation is not recognized based on the first amount of gesturing featured (No: step S104), the control unit 200 calculates a second amount of gesturing featured (a coordinate-to-coordinate distance L2, a direction d2, and the like) based on the input coordinate value (X0, Y0), and an input coordinate value (X2, Y2) which is calculated subsequent to the first input coordinate value (X1, Y1) (step S103).

The control unit 200 performs a procedure for recognizing the gesture operation based on a combination of the first amount of gesturing featured and the second amount of gesturing featured, using the aforementioned method (step S104).

For example, as illustrated in Fig. 10, if the gesture dictionary G includes a pattern indicative of the features of a gesture operation which is performed in a hatched area between two circles illustrated by the dotted lines in a state where the movable range of the user's thumb is taken into consideration when the user grasps the steering device, based on data which is a combination of the first amount of gesturing featured L1 and d1, and the second amount of gesturing featured L2 and d2, the control unit 200 obtains information regarding a high possibility that the coordinate-to-coordinate distance L is increased when the second input coordinate value is calculated compared to when the first input coordinate value is calculated, and a trace gesture operation is performed in the recessed portion 111c in the X direction according to the transition of the direction d, that is, in a clockwise direction. It is possible to recognize the gesture operation based on such information.

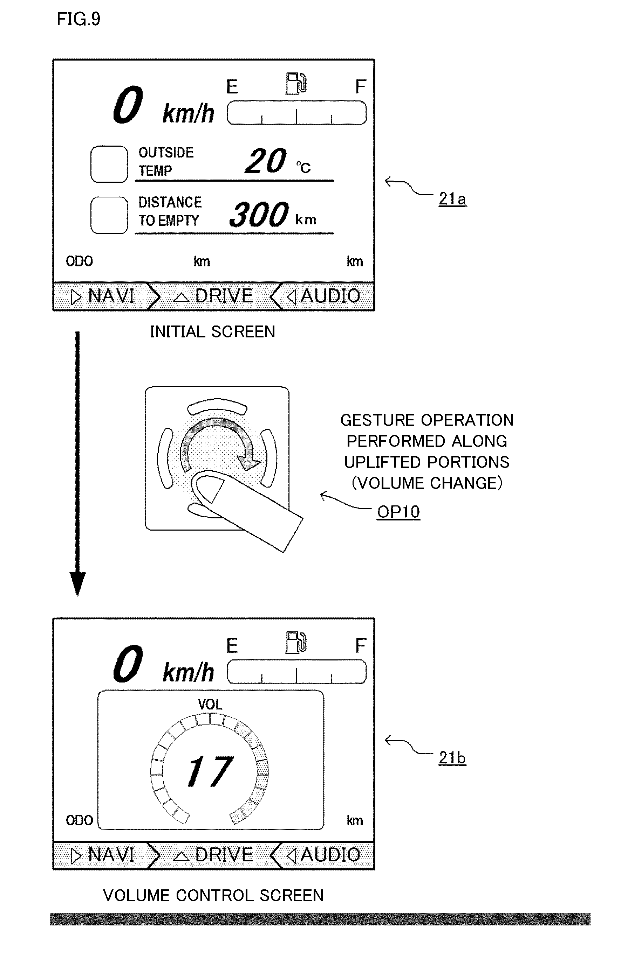

Even if operations other than the trace gesture operation are performed in the recessed portion 111c, similar to the case described above, based on the coordinate values indicative of the positions of the uplifted portions 111b or the recessed portion 111c, and the vicinity thereof, the control unit 200 prepares multiple patterns indicative of the features of a gesture operation desired to be recognized, and if the gesture dictionary G includes the multiple patterns as data, the control unit 200 can recognize various gesture operations and transmit a control signal to the vehicle-mounted electronic equipment 20 in correspondence with the recognized gesture operations. Hereinafter, in the embodiment, the unique "area 116 in an annular shape for determining a rotation gesture which is defined in a state where the movable range of the thumb is taken into consideration", and an example of an operation, which is performed by the vehicle-mounted electronic equipment 20 in correspondence therewith, will be described with reference to Fig. 9.

### (Example of Trace Gesture Operation Performed in Annular Area Which Is Defined in State Where Movable Range of Thumb Is Taken into Consideration)

### <Trace Gesture Operation OP10 Performed in Recessed Portion (Uplifted Portions)>

When electric power for operation is supplied upon ignition, the vehicle-mounted electronic equipment 20 displays an initial screen 21a illustrated in Fig. 9 on the display unit 21. In a state where the initial screen 21a is displayed, when the user performs a trace gesture operation OP10 on the recessed portion 111c of the operation surface along the uplifted portions 111b in a clockwise direction, the control unit 200 recognizes OP10, and transmits a volume control signal in correspondence with the recognized operation OP10. When the vehicle-mounted electronic equipment 20 receives the volume control signal, the vehicle-mounted electronic equipment 20 switches the initial screen 21a to a volume control screen 21b, and changes audio volume in correspondence with OP10. The user can change the audio volume of the vehicle-mounted electronic equipment 20 by performing OP10 in this way.

In the vehicular operating device 100 according to the embodiment, the area 116 for determining a rotation gesture is an area which is defined in a state where the movable range of the thumb is taken into consideration, and thus the user can accurately perform an intended operation without performing an operation so as to be adapted for the shape of the uplifted portions 111b, the recessed portion, or the like provided on the operation surface, and it is possible to improve the accuracy of recognition of the rotation gesture.

Accordingly, the thumb passes through the area for determining the rotation gesture along the trajectory of the actually input rotation gesture in a state where the user grasps the steering device, and thus the user can input a demanded operation.

### 2. Second Embodiment

The area for determining a rotation gesture on the sensors 1120 is not limited to an annular area in the first embodiment which is defined in a state where the movable range of the user' s thumb is taken into consideration when the user grasps the steering device; however, for example, as illustrated in Fig. 11, the area for determining a rotation gesture may be an area which is formed in an elliptical annular shape relative to the design made by the uplifted portions 111b and the recessed portion 111c, with the elliptical annular area having a short axis in a direction (in the direction of arrow L in Fig. 11) toward the base of the user's thumb when the user is assumed to grasp the steering device 10.

In the vehicular operating device 100 according to the embodiment, the area 116 for determining a rotation gesture is an area which is defined in a state where the movable range of the thumb is taken into consideration, and thus the user can accurately perform an intended operation without performing an operation so as to be adapted for the shape of the uplifted portions 111b, the recessed portion, or the like provided on the operation surface, and it is possible to improve the accuracy of recognition of the rotation gesture.

Accordingly, the thumb passes through the area for determining the rotation gesture along the trajectory of the input rotation gesture in a state where the user grasps the steering device, and thus the user can input a demanded operation.

### 3. Third Embodiment

In a third embodiment, for example, as illustrated in Fig. 12, the area for determining a rotation gesture may be an area which is formed in an annular shape relative to the design made by the uplifted portions 111b, the recessed portion 111c, and the like, with the annular area having an increased width on a tip side of the thumb when the user is assumed to grasp the steering device 10. In Figs. 10 and 11, as illustrated in the first and second embodiments, portions of the areas for determining a rotation gesture do not correspond to the design (made by the uplifted portions 111b and the recessed portion 111c) in an upper left area on the recessed portion 111c, and thus it is considered that a trace operation may not be input; however, in this embodiment, since the area for determining a rotation gesture corresponds to the upper left area on the recessed portion 111c, even if the thumb reaches the upper left area on the recessed portion 111c relative to the design in a rotation gesture operation, the thumb passes through the area for determination, and the user can input a demanded operation.

### 4. Fourth Embodiment

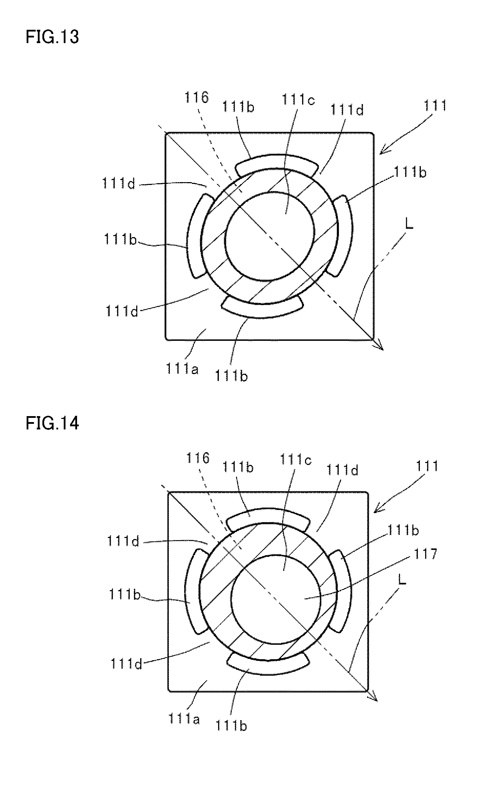

In a fourth embodiment, as illustrated in Fig. 13, a design, which is indicative of a rotation gesture area and is made by the uplifted portions 111b and the recessed portion 111c and the like, is formed in an elliptical shape which is defined in a state where the movable range of the user's thumb is taken into consideration when the user grasps the steering device 10, with the elliptical design having a short axis in the direction (in the direction of arrow L in Fig. 13) toward the base of the user's thumb when the user is assumed to grasp the steering device 10. In this embodiment, the area for determining a rotation gesture is formed in accordance with the aforementioned design.

In this configuration, since the design exactly overlaps the area for determining a rotation gesture, the user can simply and reliably trace a rotation gesture on the design with the thumb having a limited movable range when the user grasps the steering device, and ease of operation improves.

### 5. Fifth Embodiment

The shape of a design is not limited to that in the fourth embodiment, and in a fifth embodiment, as illustrated in Fig. 14, a second recessed portion 117, which is recessed more than the recessed portion 111c, is formed inside of the recessed portion 111c, and a design, which is indicative of a rotation gesture area and is formed between the outside of the second recessed portion 117 and the inside of the recessed portion 111c, is formed in an annular shape which is defined in a state where the movable range of the user's thumb is taken into consideration when the user grasps the steering device 10, with the annular design having an increased width on the tip side of the thumb, which is difficult for the tip of the thumb to reach, when the user is assumed to grasp the steering device 10. In this embodiment, the area for determining a rotation gesture is formed in accordance with the aforementioned design.

In this configuration, since the design exactly overlaps the area for determining a rotation gesture, the user can simply and reliably trace a rotation gesture on the design with the thumb having a limited movable range when the user grasps the steering device, and ease of operation improves.

### 6. Modification Example

The present invention is not limited to the aforementioned embodiments, and can be modified in various forms. Hereinafter, examples of modification are illustrated.

The stepped shape of the operation surface of the vehicular operating device 100 is not limited to the shapes illustrated in the aforementioned embodiments. The design has a three-dimensional shape which is formed by the uplifted portions 111b and the recessed portion 111c; however, the shape of the design is not limited to a three-dimensional shape, and may be a pattern or the like.

In the aforementioned embodiments, the projected capacitive sensor sheet 112 is used; however, the type of the sensor sheet 112 is not limited thereto. A surface capacitive technology may be adopted, or a technology, for example, a resistive film sensing technology, other than a capacitive sensing technology may be adopted. In these cases, the sensor sheet 112 may be formed integrally with the front surface cover (operation surface) 111.

In the aforementioned embodiments, only one vehicular operatinhg device 100 is provided in the steering device 10; however, the number of the vehicular operating devices 100 is not limited to one. A plurality of the vehicular operating devices 100 may be disposed in the steering device 10. For example, a total of two vehicular operating devices 100 may be disposed in the steering device 10 in such a way that an additional vehicular operating device 100 is provided in the main body 11 of the steering device 10 at a position in which a user can operate the additional vehicular operating device 100 with the left thumb while grasping the steering device 10. Additionally, two more vehicular operating devices 100 may be provided on the back surfaces (on a back surface side of the main body 11) of the two vehicular operating devices 100 which are provided in this way, that is, a total of four vehicular operating devices 100 may be disposed in the steering device 10 in such a way that a user can operate the additional two vehicular operating devices 100 with the index fingers of both hands.

In the aforementioned embodiments, a vehicle is an example of a transport in which the vehicular operating device 100 is mounted; however, the transport is not limited to a vehicle. The vehicular operating device 100 can be mounted in a ship, an airplane, or the like.

Insofar as modifications do not depart from the purport of the present invention, modifications (also including the deletion of configurational elements) can be appropriately made to the embodiments and the drawings.

### Industrial Applicability

The present invention can be applied to a vehicular operating device, particularly, a vehicular operating device that is mounted in a steering device.

### Reference Signs List

- 1:: vehicle
- 10:: steering device
- 11:: main body
- 12:: steering wheel
- 1000:: control apparatus
- 100:: vehicular operating device
- 110:: contact sensor
- 111:: front surface cover
- 111a:: flat surface portion
- 111b:: uplifted portion
- 111c:: recessed portion
- 111d:: gap portion
- 112:: sensor sheet
- 112a:: first sensor array
- 112b:: second sensor array
- 1120:: sensor
- 113:: spacer
- 114:: lower case
- 115:: upper case
- 116:: rotation gesture determination portion
- 120:: switch device
- 200:: control unit
- 300:: storage unit
- G:: gesture dictionary
- C:: corresponding operation data
- Q:: predetermined set value
- Q1:: first set value
- Q2:: second set value
- 20:: vehicle-mounted electronic equipment
- 21:: display unit
- 21a:: initial screen
- 21b:: volume control screen
- 21c:: audio control screen
- 21d:: sound source selection screen
- 21e:: music search screen
- OP10:: gesture operation performed along uplifted portions
- 30:: vehicle speed sensor
- 40:: steering angle sensor

## Claims

1. A vehicular operating device that is mounted in a steering device of a transport, and receives an input operation, the device comprising:
an operation surface with which a detection object performing the input operation comes into contact; and
a sensor unit configured to detect the position of the detection object in contact with the operation surface,
wherein the operation surface includes a design indicative of a rotation gesture area, and
wherein an area on the sensor unit for determining a rotation gesture is an annular area which is defined in a state where the movable range of a user's thumb is taken into consideration when a user grasps the steering device.

2. The vehicular operating device according to claim 1,
wherein the area for determining the rotation gesture is an annular area that moves in a direction toward the base of the user's thumb relative to the design when the user is assumed to grasp the steering device.

3. The vehicular operating device according to claim 1,
wherein the area for determining the rotation gesture is an area which is formed in an elliptical annular shape relative to the design, with the elliptical annular area having a short axis in a direction toward the base of the user' s thumb when the user is assumed to grasp the steering device.

4. The vehicular operating device according to claim 1,
wherein the area for determining the rotation gesture is an area which is formed in an annular shape relative to the design, with the annular area having an increased width on a tip side of the thumb when the user is assumed to grasp the steering device.

5. The vehicular operating device according to claim 1,
wherein the design indicative of the rotation gesture area is formed in a state where the movable range of the user's thumb is taken into consideration when the user grasps the steering device.

6. The vehicular operating device according to claim 1,
wherein the design indicative of the rotation gesture area is formed in an elliptical shape which is defined in a state where the movable range of the user' s thumb is taken into consideration when the user grasps the steering device, with an elliptical design having a short axis in a direction toward the base of the user's thumb when the user is assumed to grasp the steering device.

7. The vehicular operating device according to claim 1,
wherein the design indicative of the rotation gesture area is formed in an annular shape which is defined in a state where the movable range of the user's thumb is taken into consideration when the user grasps the steering device, with the annular design having an increased width on a tip side of the thumb, which is difficult for the tip of the thumb to reach, when the user is assumed to grasp the steering device.
